# EUROPEAN PATENT APPLICATION

(11) **EP 1 553 514 A1**
(43) Date of publication of application: **13.07.2005**
(21) Application number: 04028181.8
(22) Date of filing: 27.11.2004
(51) Int. Cl.: G06F 17/60

(54) **Workflow system and method**

(30) Priority: 07.01.2004 EP 04405014
(71) Applicant: International Business Machines Corporation, Armonk, N.Y. 10504 (US)
(72) Inventor: Facciorusso, Christian, 8134 Adliswil (CH); Field, Simon, Llandaff Cardiff CF5 2QF (GB); Hoffner, Yigal, 8911 Rifferswil (CH)
(74) Representative: Klett, Peter Michael

(57) **Abstract**

A workflow system comprises a matchmaking unit for receiving a task query from a workflow, and a plurality of task definer units, each providing a definition of a task. The matchmaking unit communicates with the task definer units to evaluate the task definitions against the task query based on one or more properties associated with each task definition and provides one or more of the task definitions to the workflow as offers based on the evaluation.

## Description

### Field of the invention

The present invention relates broadly to a workflow system and method.

### Background

Workflow technology aims to help define, create, co-ordinate and manage a set of tasks undertaken to achieve a specified goal. A workflow typically uses a step by step description of the tasks that are to be performed and a low level detailed description of each task. The full specification of the possible tasks and possible flow of control is part of the workflow specification and should be available before a task begins.

Typically, task options with their appropriate selection criteria are possible and available as alternatives in the workflow, but they typically should be predefined and are expected to be included in the workflow specification. Most current workflow systems embed the specification of the task options and the decision making surrounding their selection and configuration into a monolithic description of the workflow.

Workflows often enact business processes involving expertise from different domains, and may therefore have to be all encompassing; that is a large field of expertise is covered. The task of workflow programmers is therefore considerably difficult. They should not only be versed in the workflow language, but they should also posses some expertise in all the relevant areas or at least be able to talk to such experts and extract their knowledge into a centralised description of the workflow. Current workflow systems thus typically offer static and rigid solutions to complex workflow problems, which often would ideally be solved with a high level of flexibility and adaptability.

There is a need in the art to provide an improved workflow system and method which can offer a more flexible and customised solution to complex workflow problems.

### Summary

In accordance with a first aspect of the present invention there is provided a workflow system comprising a matchmaking unit for receiving a task query from a workflow, and a plurality of task definer units each providing a definition of a task. The matchmaking unit communicates with the task definer units to evaluate the task definitions provided by the respective task definer units against the task query based on one or more properties associated with each task definition and provides one or more of the task definitions to the workflow as offers based on the evaluation.

Suitably, the workflow system additionally comprises an actor/service database for storing data associated with respective ones of a plurality of actor/service instances, and an actor/service selection unit. The actor/service selection unit communicates with the actor/service database to select one or more of the actor/service instances for conducting a selected task based on the data associated with respective ones of the plurality of actor/service instances.

In accordance with a second aspect of the present invention there is provided a workflow method comprising the steps of receiving a task query from a workflow, maintaining a plurality of task definer units, each providing a definition of a task, and evaluating the task definitions against the task query based on one or more properties associated with each task definition. One or more of the task definitions are provided to the workflow as offers based on the evaluation.

In accordance with a third aspect of the present invention there is provided a computer program, recorded on a medium, for instructing a computer to conduct a workflow method. The program comprises code for receiving a task query from a workflow, code for maintaining a plurality of task definer units, each providing a definition of a task, and code for evaluating the task definitions against the task query based on one or more properties associated with each task definition. The program further comprises code for providing one or more of the task definitions to the workflow as offers based on the evaluation.

### Description of drawings

Preferred embodiments of the present invention will now be described, by way of example only, with reference to the accompanying drawings.
**Fig. 1** is a schematic drawing of a workflow system embodying the present invention.
**Fig. 2** is a schematic drawing of another workflow system embodying the present invention.
**Fig. 3** is a schematic drawing of an extension to the workflow systems in Figures 1 or 2.
**Fig. 4** is a flowchart of a workflow method embodying the present invention.
**Fig. 5** is a schematic representation of a computer system suitable for performing the techniques described with reference to **Figs. 1** to **4**.

### Detailed description

The preferred embodiments described provide a workflow system and method for facilitating more flexible and customised solutions to complex workflow problems.

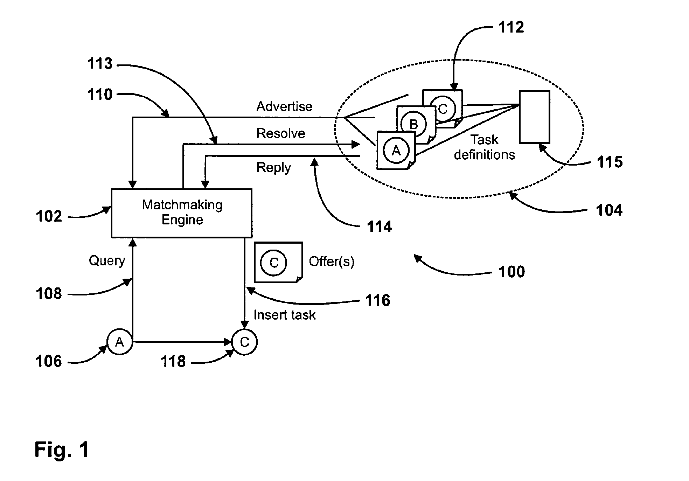

Figure 1 is a schematic drawing of a workflow system **100** in an embodiment of the present invention. The workflow system **100** comprises a matchmaking engine **102** and a task pool **104**. The task advertisements are communicated between the task definers eg. **112** and the matchmaking engine **102** as indicated at numeral **110**. Each advertisement comprises of one task definition and one or more properties associated with the task definition based on which the matchmaking process evaluates the query against each of the advertisements in turn.

When an activity "A" (an executed task **106**) of a workflow finishes, the workflow organises the relevant information such as the goal, history, workflow properties, rules, workflow policy and search policy, and calls the matchmaking engine **102** requesting the next appropriate task definition as indicated at numeral **108**. This request constitutes a query. In the matchmaking engine **102**, a matchmaking process is initiated and the query is evaluated against each of a plurality of task advertisements from task definers eg. **112** in the task pool **104**.

If one or more of the properties associated with task definition of a particular task advertisement are marked as dynamic, the matchmaking engine **102** gathers the necessary properties from the workflow query, and provides them to the relevant task definer eg. **112** as indicated at numeral **113**. The task definer eg. **112** of the relevant task then supplies the value or values of the dynamic task definition property back to the matchmaking engine **102** as indicated at numeral **114**, based on the properties of the workflow query.

This allows the task to be customised specifically for the particular workflow at hand. The customisation effected in the example embodiment through the task definers eg. **112** can further be based on any other current external circumstances that may influence the workflow/task, with relevant information being receivable through an interface **115**.
It is noted that each task definition may include one or more sub-tasks depending on the problem at hand, how a task is specified and the available workflow management system.

A task can be defined in a number of different ways, including, but not limited to, using business process execution language (BPEL), specifying an invocation of a web service as a code segment, or written in a scripting language that the workflow system can interpret or launch.

The matchmaking engine **102** completes the matchmaking process and sends one ("C") or more offers containing task definitions that match the goal of the evolving workflow to the workflow as indicated at numeral **116**. A selected task **118** (or tasks to be executed in parallel) is put into place ready to be activated. The previously terminated activity **106** can now proceed to transfer control of the workflow to the task **118**, which is then activated and becomes the current activity of the workflow.

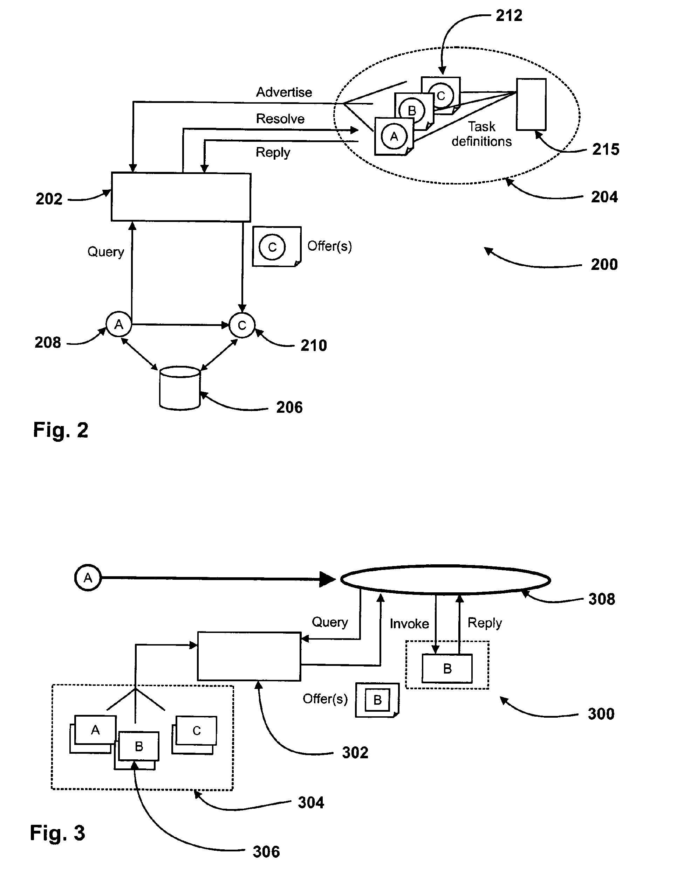

Figure 2 is a schematic drawing of another workflow system **200** in another example embodiment. The workflow system **200** comprises a web services matchmaking engine **202** and a task pool **204**. The workflow system **200** further comprises a database **206** acting as a central repository which holds the history of an evolving workflow. In the workflow system **200**, history data of the evolving workflow stored in the database **206** can be provided to the matchmaking engine **202**, in the example embodiment via an executed task **208**, to be included in the matchmaking process. The matchmaking engine **202** conducts a matchmaking process to identify one or more task offers in communication with task definers eg. **212** in the task pool **204**, as previously described with reference to the embodiment shown in Figure 1 (compare with matchmaking engine **102**, task pool **104** and task definers eg. **112**).

An interface unit **215** is also provided, having the same function as interface **115** described with reference to Figure 1.

Again, a selected task or tasks **210** are put into place ready to activated. The previously terminated activity **208** then proceeds to transfer control of the workflow to the task **210**, which is then activated and becomes the current activity of the workflow.

One advantage of the use of a central database **206** in the workflow system **200** of this embodiment is that in case a workflow splits into parallel tasks, each evolving flow can find out what the state of the other flow is. The synchronisation and joining of the parallel flows is also facilitated with the use of the central database **206**, through which the parallel flows can communicate.

Figure 3 shows an extension to the workflow systems **100** or **200** (see Figures 1 or 2 respectively). The extension **300** comprises an actor/service instance selection unit **302**, and a pool or database **304** storing data associated with a plurality of actor/service instances eg. **306**.

Once a next task has been selected by the workflow (see description above with reference to Figures 1 or 2) and activity **308** has been activated, the actor/service selection unit **302**, upon a query initiated as part of the activity **308**, interrogates the actor/service pool **304** for selection of an actor/service instance to enact a selected type of service as part of the task. The selection/interrogation can be based on information from the workflow and/or external information, similar to the matching of the task queries with the advertisements from the task pools described above with reference to Figures 1 or 2.

A response or offer from the actor/service selection unit 302 then identifies one or more available actor/service instances, eg. "B" in Figure 3, for selection and activation by the activity **308**. It may occur that, after a successful task selection, it is found that no actor/service instance is available to carry out a desired service. In such a case, the workflow can "return" to a renewed task selection as described above with reference to Figures 1 or 2. The renewed task selection is based on updated workflow properties, now taking into account the unavilability of a particular actor/service instance. It is noted that the actor/service selection unit **302** may be implemented on the same or similar platform, eg. the same web services matchmaking engine, as the matchmaking engines **102** or **202** (Figures 1 or 2 respectively).

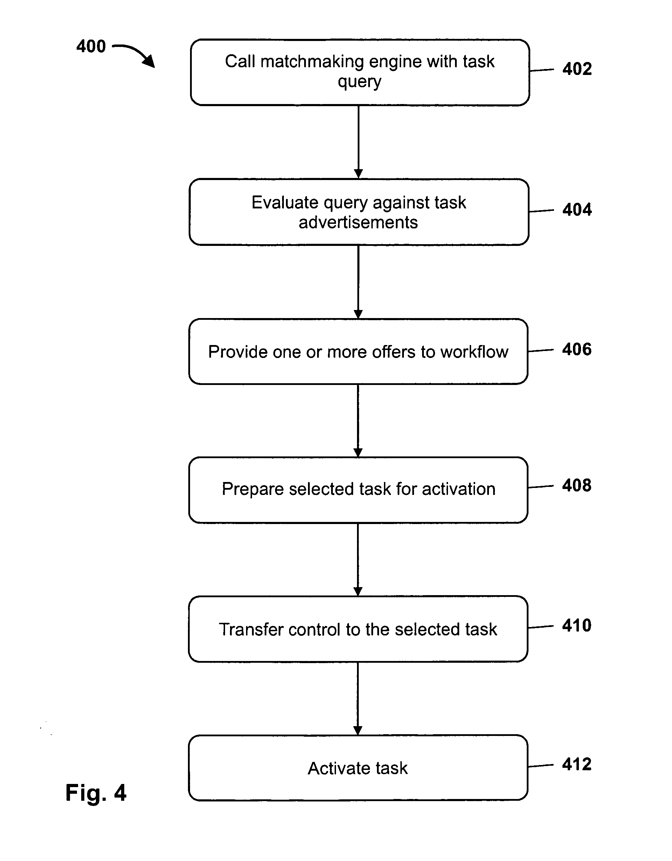

Figure 4 shows a flow chart **400** summarising a workflow method embodying the present invention. When an executed task finishes, it organises the relevant workflow information and calls a matchmaking engine requesting the next appropriate task, at step **402**. The matchmaking process is initiated and the query is evaluated against task advertisements at step **404**. On completion of the matchmaking process, one or more offers containing tasks that match the goal of the evolving workflow are sent to the workflow at step **406**. A selected task from the offered tasks is identified and prepared for activation, at step **408**. The activity associated with the previously executed task (compare step **402**) proceeds to transfer control to the selected task at step **410**, and finally the selected task is activated and becomes the current activity at step **412**.

One example of a workflow in an e-govemment processes environment would be the relocation of an individual, family or a business. Such a process typically demands for de-registration and registration at different councils, notification of change of circumstances to various government departments, application for licences in the case of a business, interaction with banks, etc.

In an example scenario, a local council would advertise its description of a number of different processes that it supports, ie. it maintains a number of task definers for each of the different processes. One of the processes would be the process for people who are leaving the local council. The advertisement could consist of the name of the council, its location, a description of the process or a reference to a website that either has the description of the process or that could initiate it. A dynamic property associated with the advertisement may distinguish between a person leaving as an individual or as a family. In such cases, there would be different procedures to follow. Different councils would advertise different descriptions of themselves and the processes they offer, making up the pool of potential tasks.

In this scenario, the task query could comprise details of the person leaving, an indication of where they are moving from and to, and the family status. The task query would be launched to the matchmaking engine by the customer who is leaving the council, and the matchmaking engine would initiate a matchmaking process which would compare and evaluate the query against each existing advertisement. Information in the task query would be used in the assessment of any dynamic properties in the advertisements. The advertisement from the appropriate council would be selected based on where the customer is departing from and what his or her circumstances are and how they match with the respective advertisements and their associated properties.

In the following, some advantages and features of the embodiments described are summarised.

Instead of pre-specifying the flow of tasks in prior art workflow systems and methods, the example embodiments provide dynamic selection of the next task or tasks as the workflow progresses. This is achieved by replacing the embedded point of decision making in the prior art workflow systems and methods with a call to a symmetric matchmaking engine, where task definitions are advertised from a task pool unit.

In the example embodiments, both the evolving workflow and the tasks can describe themselves what they demand of the other party and what their selection criteria are. Thus, symmetric matchmaking is used to select the next task to be performed in the evolving workflow and provision is made to also customise the task for the specific workflow at the same time.

These characteristics may be summarised as follows:
- task choice is provided at the termination of each and every activity;
- the pool of choices is moved outside the workflow, where the workflow can search for the next tasks to be performed;
- selection is allowed to be done partly or fully outside the workflow;
- selection is expended to be a two way (symmetric) selection, i.e. the workflow selects the next task and the task selects the workflow.

In the example embodiments, each task provides a description of itself in terms of attributes that are relevant to its characterisation. Some of the attributes may refer to the relationship between a high level goal and this task. Each task further provides the conditions/rules upon which it will deem itself appropriate for the progress of the workflow.

The workflow, in turn, provides a description of itself, which includes the goal, the history, and conditions/rules associated with the workflow. The goal is a description of what the workflow is expected to achieve, while the history of the workflow is a description of what has already been carried out to achieve this goal. The conditions/rules that the workflow owner wishes to apply to the workflow and its evolution could include a policy that specifies restrictions on the manner in which the goal can be achieved. This may for example be in the form of cost, resource that can be allocated, legal limitations or preferences, and geographical/departmental restrictions on scope of search of the next task.

All of the above information is utilised in the symmetric matchmaking process of the example embodiments, which in turn provides the following characteristics to the selection process:
- customisation of the task;
- up-to-date values of the workflow and the task environment, such as interest rates, resource usage, provider circumstances, expertise available, geographical location, context, etc.

By making a dynamic deferred selection and using the dynamic properties of the symmetric matchmaking engine, it is possible to take into account the most up-to-date view of the workflow and its surroundings in the example embodiments. Therefore, not only does the workflow select the activity, but also in effect the task selects the workflow. This results from the symmetric nature of the matchmaking process as described above.

The example embodiments can be implemented for both fully automated workflows, where the decision making process can be entirely formulated so that a script can execute it, or for semi-automated workflows, where the decision making process is a combination of scripts and people explicit intervention.

The utilisation of a matchmaking engine in the example embodiments provides a number of advantages, including the following:
- evolution of the workflow. The dynamic aspect of the evolution is achieved by deferring the selection of the next task(s) as late as is possible, i.e. until termination of a previous activity. This allows a selection based on the most up-to-date circumstances to be made.
- decision making emphasis shift. The symmetric matchmaking process facilitates the shifting of the emphasis of the decision to were the expertise is. While the evolving workflow can select the next activity, the task can select the workflow by defining rules that refer to the workflow description of itself, its history and its goal. This allows shifting the selection emphasis from the workflow to the task definitions. This gives the domain experts the advantage and allows their expertise to be the determining factor in the evolution of the workflow, while taking into consideration workflow (owner) preferences.

In the described embodiments, domain expertise is exploited in the workflow progression. It is the application domain and hence the person who defines the task, that knows the interdependencies among the tasks best, and therefore understands what can and can not be done in parallel. It is therefore appropriate that the available options (with regard to what should be done, in what order it should be done and whether it should be done sequentially or in parallel) are described by the task definer, and thus the task advertiser in the example embodiments. While the user or owner of the workflow remains able to specify their preferences, the onus of the selection is in many cases (particularly where the user has no special expertise in the area), with the provider/advertiser of the activity.

The symmetric matchmaking process allows both sides to provide properties describing themselves and describing what they are looking for. Both sides also supply rules that select or de-select the advertisement. By allowing the consumer owner side the provide properties, the rules that look at those properties are effectively expressed both in the language of the consumer side and the task/activity provider side. This "translation" capability facilitates a translation from a goal and an evolving history of the workflow to a set of tasks and the control flow between them. A second level of selection can be done when searching for the specific actor and resources to enact the task as an activity, as described in the embodiment shown in Figure 3.

The symmetric matchmaking process facilitates the deferral of the allocation of a value to a property to matchmaking time, allowing a script attached to the advertisement or an exit to an external program or input. The resolution of the value can obtain from the query the details of the evolving workflow, thus taking into account its specific circumstances and preferences. The task definition can be modified at matchmaking time and can be returned in a customised form to the evolving workflow. The deferred resolution of property values also allows the tasks to assess the availability of resources and expertise for carrying out the task.

The matchmaking process can be used to distribute the task definitions and associated rules, enabling different domains, departments, organisations, conglomerates, markets, etc. to offer similar or different tasks that achieve a goal in different ways. A network of matchmaking engines that know of each other can then re-direct the workflow towards external domains of expertise where the appropriate task definitions can be found. The distribution itself can happen at different levels: both the task definition and its execution can be distributed. The distribution offers a unique advantage but also raises the problem of the management of the distributed workflow definition and execution space.

Different degrees of flexibility can be exploited, ranging from the fully pre-defined workflow to a completely open progress workflow, making decisions at the end of each activity. In addition, the same goal can be executed differently depending on:
- processes in which there is no formal definition or strict priority, yet some interdependencies exist (buying a house, moving business or private, death in the family, setting up a business, job loss, prolonged illness);
- available task definitions differ between application domains or organisations. Each organisation may have its own way of achieving similar goals;
- locality of the tasks (see e-government example): a task can cross an organisational or geographical boundary and thereafter the flow will be determined by local considerations and policy/regulations;
- available resources differ and vary, affecting the manner in which a goal can be reached.

The example embodiments cater for the transition between an old definition of a task and a new one being installed. Both versions can co-exist as long as is useful, provided the appropriate selection conditions are applied. The distribution of the responsibility to define tasks to where the expertise is alleviates the problem of maintaining large, monolithic and complex workflow definitions.

One specific application embodying the invention is in a Business-to-Customer (B2C) system, where the customer/client interacts with the business/server, and the customer is in charge of the evolving workflow. In the B2C environment, an expert may alternatively use or control the workflow on behalf of the consumer, and making the decisions in conjunction with the consumer.

Another specific application embodying the invention is in a Business-to-Business (B2B) environment, for example a workflow in one organisation who's aim is to purchase a number of related items that are dependent on each other, but from different suppliers.

Embodiments of the invention may be implemented semi-automated where the decision making process is a combination of scripts and people explicit intervention, or fully automated, where the decision making process can be entirely formulated so that a script can execute it.

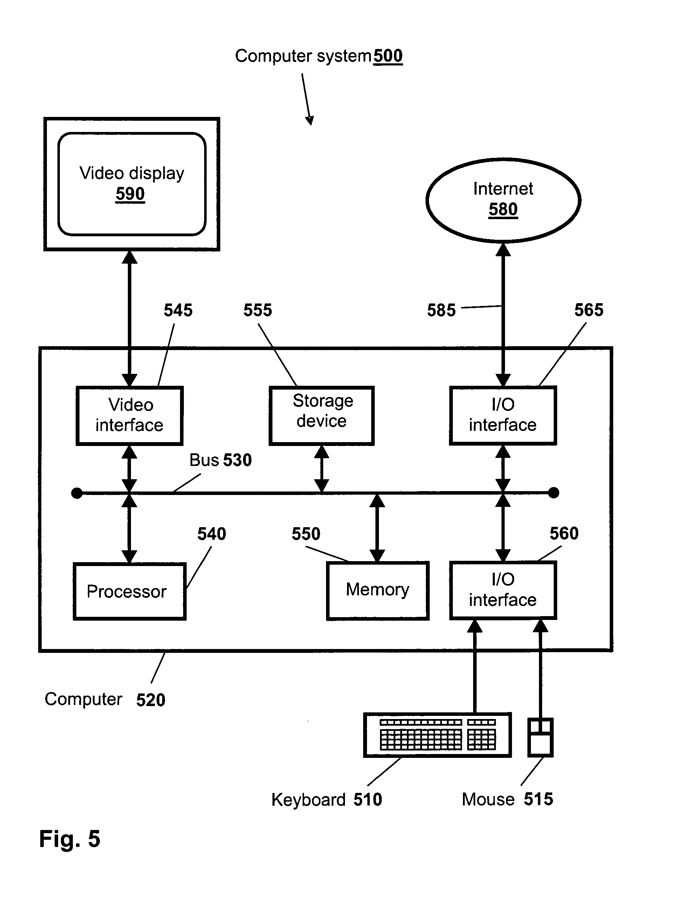

Fig. **5** is a schematic representation of a computer system **500** that can be used to implement the techniques described herein. Computer software executes under a suitable operating system installed on the computer system **500** to assist in performing the described techniques. This computer software is programmed using any suitable computer programming language, and may be thought of as comprising various software code means for achieving particular steps.

The components of the computer system **500** include a computer **520**, a keyboard **510** and mouse **515**, and a video display **590**. The computer **520** includes a processor **540**, a memory **550**, input/output (I/O) interfaces **560, 565**, a video interface **545**, and a storage device **555**.

The processor **540** is a central processing unit (CPU) that executes the operating system and the computer software executing under the operating system. The memory **550** includes random access memory (RAM) and read-only memory (ROM), and is used under direction of the processor **540**.

The video interface **545** is connected to video display **590** and provides video signals for display on the video display **590**. User input to operate the computer **520** is provided from the keyboard **510** and mouse **515**. The storage device **555** can include a disk drive or any other suitable storage medium.

Each of the components of the computer **520** is connected to an internal bus **530** that includes data, address, and control buses, to allow components of the computer **520** to communicate with each other via the bus **530**.

The computer system **500** can be connected to one or more other similar computers via a input/output (I/O) interface **565** using a communication channel **585** to a network, represented as the Internet **580**.

The computer software may be recorded on a portable storage medium, in which case, the computer software program is accessed by the computer system **500** from the storage device **555**. Alternatively, the computer software can be accessed directly from the Internet **580** by the computer **520**. In either case, a user can interact with the computer system **500** using the keyboard **510** and mouse **515** to operate the programmed computer software executing on the computer **520**.

Other configurations or types of computer systems can be equally well used to implement the described techniques. The computer system **500** described above is described only as an example of a particular type of system suitable for implementing the described techniques.

Various alterations and modifications can be made to the techniques and arrangements described herein, as would be apparent to one skilled in the relevant art.

## Claims

1. A workflow system [100] comprising:
a matchmaking unit [102] for receiving a task query from a workflow,
a plurality of task definer units [112] each providing a definition of a task, and
wherein the matchmaking unit [102] is adapted to communicate with the task definer units [ 112] to evaluate the task definitions provided by the respective task definer units [ 112] against the task query based on one or more properties associated with each task definition and provides one or more of the task definitions to the workflow as offers based on the evaluation.

2. A workflow system as claimed in claim 1, further comprising
an actor/service database [304] for storing data associated with respective ones of a plurality of actor/service instances [306], and
an actor/service selection unit [302],
wherein the actor/service selection unit [302] is adapted to communicate with the actor/service database [304] to select one or more of the actor/service instances [306] for conducting a selected task based on the data associated with respective ones of the plurality of actor/service instances [306].

3. A workflow system as claimed in claims 1 or 2, wherein one or more of the properties associated with the task definitions are dynamic, and wherein the matchmaking unit [102] provides properties of the workflow from which the query is received to one or more of the task definer units [112], whereby the task definer units [112] provide specific value or values of the dynamic properties to the matchmaking unit [102] based on the received properties of the workflow.

4. A workflow system as claimed in one of the claims 1 to 3, further comprising an interface unit [115] for transceiving data external to the workflow associated with one or more of the task definitions, the respective task definer units [112] updating the task definitions based on said data.

5. A workflow system as claimed in one of the claims 1 to 4, wherein the matchmaking unit [102] receives the task query from the workflow at the termination of an activity of the workflow.

6. A workflow system as claimed in one of the claims 1 to 5, further comprising a database [206] for storing workflow data associated with the workflow, wherein the database [206] functions as a central repository and is in communication with current task or tasks of the workflow, and wherein the task query is based on said data stored in the database [206].

7. A workflow system as claimed in one of the claims 1 to 6, wherein the matchmaking unit [102] and/or the task definer units [112] and/or the actor/service database [304] and/or the actor/service selection unit [302] are implemented as sites on a computer network.

8. A workflow method comprising the steps of:
receiving a task query from a workflow,
maintaining a plurality of task definer units, each providing a definition of a task,
evaluating the task definitions against the task query based on one or more properties associated with each task definition, and
providing one or more of the task definitions to the workflow as offers based on the evaluation.

9. A workflow method as claimed in claim 8, further comprising the steps of:
maintaining a database comprising data associated with respective ones of a plurality of actor/service instances, and
selecting one or more of the actor/service instances for conducting a selected task based on the data associated with respective ones of the plurality of actor/service instances.

10. A workflow method as claimed in claims 8 or 9, wherein one or more of the properties associated with the task definitions are dynamic, and the method further comprises the step of utilising a specific value or values of the dynamic properties based on properties of the workflow in the evaluation of the tasks.

11. A workflow method as claimed in one of the claims 8 to 10, wherein the task definitions are updated based on properties external to the workflow.

12. A workflow method as claimed in one of the claims 8 to 11, wherein the task query is received from the workflow at the termination of an activity of the workflow.

13. A workflow method as claimed in one of the claims 8 to 12, further comprising the step of maintaining a database for workflow data associated with the workflow, and wherein the data base functions as a central repository and is in communication with current task or tasks of the workflow, and wherein the task query is based on said data stored in the database.

14. A computer program element comprising program code means for performing the method of any one of the claims 1 to 13 when said program is run on a computer.

15. A computer program product stored on a computer usable medium, comprising computer readable program means for causing a computer to perform the method according to any one of the claims 1 to 13.
